(19) Europäisches Patentamt

European Patent Office

Office européen des brevets

(11) **EP 1 091 271 A2**

(12) **EUROPÄISCHE PATENTANMELDUNG**

(43) Veröffentlichungstag:
   **11.04.2001  Patentblatt 2001/15**

(51) Int. Cl.[7]: **G05B 19/418**

(21) Anmeldenummer: **00121404.8**

(22) Anmeldetag: **29.09.2000**

(84) Benannte Vertragsstaaten:
   **AT BE CH CY DE DK ES FI FR GB GR IE IT LI LU MC NL PT SE**
   Benannte Erstreckungsstaaten:
   **AL LT LV MK RO SI**

(30) Priorität: **06.10.1999 DE 19948185**
   **11.11.1999 DE 19954244**

(71) Anmelder:
   **MIT-Management intelligenter Technologien GmbH**
   **52076 Aachen (DE)**

(72) Erfinder:
   • **Detro, Franz, Dipl.-Inform.**
     **52074 Aachen (DE)**
   • **Lieven, Karl, Dipl.-Math., Dipl.-Wirth.-Math**
     **52224 Stolberg (DE)**
   • **Nelke, Martin,-Dipl.-Ing.,M.O.R.**
     **47533 Kleve (DE)**
   • **Schrötter, Torsten, Dipl.-Ing., M.O.R.**
     **52064 Aachen (DE)**

(74) Vertreter:
   **Springorum, Harald, Dr. et al**
   **Kiani & Springorum,**
   **Patent- und Rechtsanwälte,**
   **Heinrich-Heine-Allee 29**
   **40213 Düsseldorf (DE)**

(54)   **Vorrichtung zur qualitätsoptimierten Produktionssteuerung von Wellpappeanlagen**

(57)   Die vorliegende Erfindung betrifft eine Vorrichtung zur Bestimmung eines Stapelstauchwiderstand-Vorhersagewertes (BCT-Vorhersagewertes) (**10**) eines Weilpappeproduktes (**4**) aus einer durch technische Parameter gegebenen Rohpappenspezifikation von Wellpappe (**6**) und/oder einer gleichfalls durch technische Parameter gegebenen Produktspezifikation (**14**) des Wellpappeproduktes, wobei zur Bestimmung des Stapelstauchwiderstand-Vorhersagewertes (BCT-Vorhersagewert) (**10**) ein neuronales Approximationsnetz (**21**) oder eine Approximations Fuzzy Logic verwendet werden, denen als Eingangsgrößen zumindest die technischen Parameter der Rohpappenspezifikation (**6**) und die technischen Parameter der Produktspezifikation(**14**) zugeführt werden und die als Ausgangsgröße zumindest den Stapelstauchwiderstand-Vorhersagewert (BCT-Vorhersagewert) (**10**) liefert. Auch lehrt sie eine Vorrichtung zur Bestimmung der technischen Parameter einer Rohpappenspezifikation (**6**) von Wellpappe aus zumindest einer durch technische Parameter gegebenen Produktspezifikation (**14**) eines Wellpappeproduktes und einem Stapelstauchwiderstand-Zielwert (BCT-Zielwert) (**22**) als Eingangsgrößen, die auch die Vorrichtung zur Bestimmung eines Stapelstauchwiderstand-Vorhersagewertes (BCT-Vorhersagewertes) (**23**) des Wellpappeproduktes nach der vorliegenden Erfindung aufweist und sie zur Bestimmung der Parameter der Rohpappenspezifikation (**14**) verwendet.

FIG. 4

**Beschreibung**

Die vorliegende Erfindung betrifft Vorrichtungen zur qualitätsoptimierten Produktionssteuerung von Wellpappenanlagen.

Ausgangsmaterial für die Wellpappenherstellung ist das Wellpappenrohpapier. Je nach Aufgabenstellung steht ein breites Sortenspektrum mit unterschiedlichen physikalischen und optischen Eigenschaften zur Auswahl. Die Deckenpapiere zeichnen sich generell durch eine hohe Berst- und Reißfestigkeit aus, da die "Außenhaut" der Wellpappe besonders starken Beanspruchungen standhalten muß. Über die Stapelfähigkeit und die Polstereigenschaften der Verpackung entscheidet zusätzlich die Wahl der Wellenpapiere. Je nach eingesetzter Papiersorte und Flächengewicht entstehen so Wellpappensorten definierter Festigkeit. Ein weiteres Entscheidungskriterium sind die Anforderungen an die Bedruckung der Verpakkung. Decken- und Wellenpapiere können sowohl aus Frischfaser (Holzstoff) als auch aus Altpapier hergestellt werden. Je nach Faserzusammensetzung unterscheidet man die Wellpappenrohpapiere: so etwa Kraftliner, Testliner oder Schrenz als Deckenpapiere und Halbzellstoffpapier oder Wellenstoff als Wellenpapiere.

Die Herstellung der Wellpappe erfolgt in der sogenannten Wellpappenanlage (WPA). Das Papier wird erwärmt und befeuchtet und erreicht dadurch die erforderliche Elastizität, um geformt zu werden. Es wird dann unter Druck- und Hitzeeinwirkung zwischen zwei zahnradartig ineinandergreifenden Riffelwalzen hindurchgeführt. So kommt die Welle in die Pappe. Je nach gewünschter Wellenform haben die Walzen eine grobe, mittlere oder feine Riffelung. So entstehen die unterschiedlichen Wellenarten, die nach Wellenhöhe und -breite definiert sind (vgl. auch DIN 55 468). Das gewellte Papier wird dann mit erhitztem Stärkeleim mit einer glatten Deckenbahn verklebt. Die einseitige Wellpappe ist fertig. Wird auf die einseitige Wellpappe eine zweite Deckenbahn aufgeklebt, entsteht die einwellige Wellpappe. Sie ist die verbreitetste Wellpappenart. Durch Hinzufügen weiterer gewellter und glatter Papierbahnen wird mehrwellige (zwei- und dreiwellige) Wellpappe hergestellt. Diese Sorten werden bei besonderen Anforderungen an die Stabilität eingesetzt.

Die Wellpappenbahnen werden vor Verlassen der Wellpappenmaschine auf die geforderten Formate - abhängig von der weiteren Verarbeitung - zugeschnitten und gerillt. Dies geschieht mit Hilfe rotierender Schneid- und Rillmesser, die in Längs- oder in Querrichtung arbeiten. Bis zu 300 Meter Wellpappe pro Minute können an modernen Wellpappenanlagen hergestellt werden.

Aus den Wellpappenformaten entstehen im nächsten Arbeitsgang, dem Finishing, Schachteln, Stanzverpackungen, polsternde Innenverpackungen, Displays etc. Sogenannte Inline-Maschinen (von engl. "in line" - in einer Reihe) verarbeiten Wellpappenzuschnitte zu fertigen Faltkisten, dem noch immer häufigsten Wellpappenprodukt. Mehr als 20.000 Stück pro Stunde werden hier bedruckt, geschlitzt, gefaltet und seitlich verschlossen. Dieser seitliche Verschluß wird je nach verpackungstechnischen Erfordernissen durch Verleimen, durch Überkleben mit Verschlußstreifen oder durch Heften mit Drahtklammern vorgenommen. Maschinengängige Verpackungen für Abpackautomaten entstehen auf elektronisch gesteuerten Stanzen, die Millimeterarbeit leisten. Es gibt sie als Flachbett- oder Rotationsstanzen. Soll eine Verpackung aus Wellpappe nicht nur maßgeschneidert und stabil, sondern auch extrem wasserabweisend, fettabweisend, ölfest, schwer entflammbar, rutsch- und scheuerfest, fäulnisverhindernd oder gar insektenabweisend sein, können diese Eigenschaften durch Imprägnieren und Beschichten erzielt werden. Die Imprägnierung der Papieroberfläche erfolgt entweder bereits bei der Herstellung der Wellpappenrohpapiere oder in der Wellpappenanlage. Alle Papierbahnen der Wellpappe können so behandelt werden. Bei den Wellpappenformaten ist die Beschichtung der Innen- und Außenseite mit Paraffin und schmelzbaren Kunststoffen (heiße Verfahren) sowie mit Kunststoffdispersionen und Lacken (kalte Verfahren) möglich.

Die Verwender von Wellpappenverpackungen müssen sich auf eine gleichbleibende Qualität der verschiedenen Sorten verlassen können. Nur so ist sichergestellt, daß alle Kriterien für den Schutz vor Transport- und Lagerbeanspruchungen auch erfüllt werden. Diese betreffen Beanspruchungen durch Stoß, Druck, Zug und Biegung genauso wie jene, die durch Scheuern, Vibration, Klimaeinflüsse, Korrosion, Strahlen oder Tiere und Pflanzen entstehen. Der Verband der Wellpappenindustrie (VDW) hat Standardqualitäten für Wellpappe geschaffen. Diese Sorten mit zugeordneten Festigkeitswerten erleichtern es den Verwendern, Angebote verschiedener Hersteller zu vergleichen. Das Ziel dieser Standardisierung war es, daß jeder Hersteller von Wellpappe bei Anfragen identische Qualitäten anbietet. Außerdem vereinfacht die Sortenklarheit das Bestellwesen und die Eingangskontrolle. Auch der Verpackungsentwicklung stehen so verbindliche technologische Werte für ihre Arbeit zur Verfügung. Die Klassifizierungsnormen beschreiben die Festigkeit der Wellpappe und damit auch der Wellpappenverpackung.

Sie werden heute durch mehrere technologische Werte bestimmt:

- den Berstwiderstand,

- die Durchstoßarbeit, und

- den Kantenstauchwiderstand.

Um ein Maß für die Festigkeit von Wellpappenverpackungen zu erhalten, wird ein sogenannter Stapelstauchwiderstand nach einer genormten Prüfmethode gemessen. Beim Box-Compressions-Test staucht man eine verschlossene leere Wellpappenverpackung zwischen zwei ebenen und parallelen Druckplatten in einer Prüfpresse mit konstanter Stauchgeschwindigkeit - bis die Verpackung zusammenbricht. Die maximal erreichte Kraft gibt den Stapelstauchwiderstand der Wellpappenverpackung an. Am Ende folgt die Qualitätssicherung, bei der als wesentliches Kennzeichen der Stapelstauchwiderstand in Newton (BCT-Wert, Box Compression Test) bestimmt wird.

Dieser BCT-Wert stellt für Wellpappeverpackungen neben dem für die Transportfähigkeit von Wellpappeverpackungen wichtigen Werten für die Berstfestigkeit (Berstwiderstand) und die Durchstoßarbeit der Wellpappe eine weitere entscheidende Kenngröße dar, die die Stapelfähigkeit der jeweiligen Wellpappeverpackung beschreibt.

Die Stapelbeanspruchung stellt eine statische (ruhende) Belastung dar, bei der das Packgut selbst zumeist nicht mitträgt. Im Gegensatz zur Eigenschaft der Transportfähigkeit, die die Eignung der Verpackung beschreibt einer dynamischen Transportbeanspruchung gewachsen zu sein, bezieht sich der BCT-Wert somit auf ihre Eignung der statischen Stapelbeanspruchung zu genügen, wobei ein möglichst hoher BCT-Wert (Stapelstauchwiderstand) erwünscht ist.

Will man nun den BCT-Wert so beeinflussen, daß er den Anforderungen im Hinblick auf die für die vorgesehene Verwendung der Wellpappeverpackungen notwendige Stapelbeanspruchung Genüge tut, so wird man einen Zusammenhang zwischen den durch entsprechende technische Parameter gegebenen Rohpappespezifikationen und den gleichfalls durch technische Parameter gegebenen Produktspezifikationen einerseits und dem BCT-Wert andererseits suchen, um so den BCT-Wert des Wellpappeprodukts über die Parameter der Rohpappespezifikation planmäßig beeinflussen zu können, wobei die Rohpappenspezifikation dabei vorzugsweise die Festlegung von

- Flächengewicht

- Papiersorte, und

- Art der Verleimung

für jede Schicht der Wellpappe umfassen kann.

Die Papiersorte für ein gegebenes Flächengewicht umfaßt wiederum vorzugsweise eine Herstellerspezifikation verschiedener Qualitätseigenschaften, die gegeben ist, sobald Papiersorte und Flächengewicht festgelegt sind (siehe unten). Die einwellige Ausführung von Wellpappe besitzt die Schichten

- Außendecke

- Welle

- Innendecke

Die zweiwellige Ausführung von Wellpappe besitzt die Schichten

- Außendecke

- Welle 1

- Zwischendecke

- Welle 2

- Innendecke

Mehr als zweiwellige Ausführungen umfassen je zusätzlicher Welle

- eine weitere Welle

- eine weitere Zwischendecke

Als Papiersortenbezeichnungen sind etwa vorzugsweise die folgenden dem Fachmann bekannten Bezeichnungen gebräuchlich

- Kraftliner

- Testliner

- Wellenstoff

- Halbzellstoff

- Duplex

- Speziell verleimter Testliner

- Hansakraft Braun

- Fluting (Wellenstoff)

Mit der Festlegung der Papiersorte und Flächengewicht sind gleichzeitig bestimmte Qualitätseigenschaften bestimmt, so auch der, vom Hersteller des Papiers spezifizierte

- Streifenstauchwiderstand (SCT-Wert)

Zur Ermittlung des vorstehend bereits erwähnten gesuchten Zusammenhanges zwischen Rohpappenspezifikation, Produktspezifikatiom und BCT-Wert existieren eine Reihe von Ansätzen wie etwa der von Dagel und Wessmann (vgl. Dagel; Y., Wessmann, G., „*Der Einfluß von Materialeigenschaften und Dimensionen auf die Eignung von Faltschachteln in bezug auf die Steifigkeit*", Svensk Papperstidning 61, 973 - 982 (1958), Nr. 22 sowie Dagel, Y., Wessmann, G., „*Untersuchungen über das Stauchverhalten von Faltschachteln in Abhängigkeit von den Schachtelabmessungen und der Steifigkeit des Kartons*", Verpackungs-Rundschau, 69 - 95 (1959), Nr. 12) oder von Windaus (vgl. Windaus, G., Steinig, J. und Petermann, E., „*Ermittlung einer Formel zur Berechnung des Stauchwiderstandes von Faltschachteln aus Vollpappe aus den am Packstoff Vollpappe gemessenen Biegesteifigkeitswerten und den Schachtelabmessungen*", Verpackungs-Rundschau, 61 - 66 (1977), Nr. 8) sowie von Ehrhart und Poetzing (Erhart, K.J., Poetzing, M., „*Zur Berechnung des Stauchwiderstandes von Faltschachteln*", Verpackungs-Rundschau, 91 - 96 (1981), Nr.12).

Ein weiterer Ansatz, der den Stapelstauchwiderstand in Abhängigkeit der Ausrichtung der Fasern (wobei dort nach Maschinenrichtung und Querrichtung hierzu unterschieden wird) zu ermitteln sucht, findet sich bei Angerhöfer (vgl. Angerhöfer, M., „*Die Anisotropie der Biegesteifigkeit von Faltschachtelkarton und ihr Einfluß auf den Stauchwiderstand kleinformatiger Faltschachteln*", München 1999, Papiertechnische Stiftung (PTS), PTS-Forschungsbericht PTS-FB 11/99).

In der Praxis wird jedoch in aller Regel die sogenannte McKee-Formel verwendet (vgl. McKee, R.C., Gander, J.W. und Jachuta, J.R., „*Compression Sztrength Formula for Corrugated Boxes*", Paperboard Packaging, 48, 149 - 159 (1963), Nr.8), um den Zusammenhang zwischen den technischen Paramtern der Rohpappenspezifikation und dem Stapelstauchwiderstand des aus der Rohpappe hergestellten Produktes vorherzusagen.

Sie lautet:

$$BCT = \sqrt{l+b} \cdot ECT \cdot C_W$$

Aufgelöst ergibt sich hieraus ein wie folgt gegebener

**Theoretischer Stapelstauchwiderstand *BCT***

$$BCT = \sqrt{l+b} \cdot ECT \cdot C_W$$

$$ECT = F \cdot (SCT_{AD} + SCT_{ID} + a \cdot SCT_W)$$

$$F = f(Q) \text{ (aus Tabelle)}$$

$$Q = FM_{AD} + FM_{ID} + a \cdot FM_W$$

| $\Rightarrow ECT$ | Kantenstauchfestigkeit | $\Rightarrow a$ | Welleneinzugsfaktor |
|---|---|---|---|
| $\Rightarrow F$ | Kantenstauchanpassungsfaktor | $\Rightarrow b$ | Breite |
| $\Rightarrow Q$ | Flächenbezogene Masse | $\Rightarrow l$ | Länge |
| $\Rightarrow AD$ | Außendecke | $\Rightarrow C_W$ | Wellenformationsfaktor |
| $\Rightarrow ID$ | Innendecke | $\Rightarrow FM$ | Flächenmasse |
| $\Rightarrow W$ | Wellenpapier | $\Rightarrow SCT$ | Streifenstauchwiderstand |

wobei zur näheren Veranschaulichung als Beispiel die folgende Berechnung dienen mag:

**Beispiel zur Berechnung des *BCT*- Wertes**

$$\frac{BCT}{[N]} = \sqrt{\frac{l+b}{[mm]}} \cdot \frac{ECT}{[kN]} \cdot C_W = 24,5 \cdot 5,81 \cdot 21,6 = 3074$$

$$ECT = F \cdot (SCT_{AD} + SCT_{ID} + a \cdot SCT_W)$$

$$F = f(Q) \qquad \text{(aus Tabelle)}$$

$$Q = FM_{AD} + FM_{ID} + a \cdot FM_W$$

| $\Rightarrow ECT$ | 5810 N | $\Rightarrow a$ | 1,539 |
|---|---|---|---|
| $\Rightarrow F$ | 0,57 | $\Rightarrow b+l$ | 250 mm + 350 mm |
| $\Rightarrow Q$ | 605 g/m$^2$ | $\Rightarrow C_W$ | 21,6 |
| $\Rightarrow FM_{AD}$ | 200 g/m$^2$ | $\Rightarrow SCT_{AD}$ | 3600 N/m |
| $\Rightarrow FM_{ID}$ | 210 g/m$^2$ | $\Rightarrow SCT_{ID}$ | 2900 N/m |
| $\Rightarrow FM_W$ | 127 g/m$^2$ | $\Rightarrow SCT_W$ | 2400 N/m |

Es ist somit ersichtlich, daß die McKee-Formel insbesondere nicht der Einfluß der Höhe der Faltkiste oder bei Tray-Produkten die Abmaße von Ausstanzungen in ihrem Einfluß auf den BCT-Wert berücksichtigt. Abgesehen vom spezifizerten SCT-Wert und dem Flächengewicht werden bei der Berechnung des ECT-Wertes auch andere Qualitätseigenschaften der Papiersorte nicht berücksichtigt.

Allen vorgenannten Ansätzen ist gemeinsam, daß sie versuchen, über allgemeine physikalische Gesetzmäßigkeiten oder mit Mitteln der statistischen Näherung zu einem geschlossenen Ausdruck zu gelangen, der eine Vorhersage des BCT-Wertes anhand von technischen Parametern der jeweiligen Rohpappespezifikation und einer Produktspezifikation des Wellpappeproduktes zu gelangen, wobei die Produktspezifikation vorzugsweise folgende technische Parameter umfassen kann:

- Geometrie des Produktes (Länge x Breite x Höhe)
- Art, Ort und Länge von Rillungen
- Art der Bedruckung
- Geometrie von Eingriffsöffnungen
- Geometrie von Ausstanzungen
- Art der Ausführung, Position von Aufreißfäden

Eine Vorhersage gelingt jedoch aufgrund der Vielzahl der Einflußfaktoren und der unzulänglichen Möglichkeit ihrer jeweiligen Erfassung einerseits und der Komplexität ihres Zusammenwirkens, die mathematisch zu beschreiben kaum möglich ist, andererseits durch die vorgenannten Ansätze nur unbefriedigend.

Eine solche Vorhersagemöglichkeit ist jedoch für die Herstellung von Wellpappeprodukten, an die definierte Anforderungen hinsichtlich ihres Stapelstauchwiderstandes gestellt werden, höchst wichtig, da erst eine solche möglichst gute Vorhersage eine hinsichtlich des Stapelstauchwiderstandes qualitätsoptimierte Produktionssteuerung von Wellpappenanlagen ermöglicht.

Es ist daher zunächst Aufgabe der vorliegenden Erfindung eine Vorrichtung anzugeben, die eine ausreichend exakte Vorhersage eines Stapelstauchwiderstand-Wertes (BCT-Wertes) anhand von technischen Parametern der jeweiligen Rohpappespezifikation und der Produktspezifikation des Wellpappeproduktes ermöglicht.

Diese Aufgabe wird durch eine Vorrichtung zur Bestimmung eines Stapelstauchwiderstand-Vorhersagewertes (BCT-Vorhersagewertes) eines Wellpappeproduktes aus einer durch technische Parameter gegebenen Rohpappenspezifikation von Wellpappe und/oder einer gleichfalls durch technische Parameter gegebenen Produktspezifikation des Wellpappeproduktes gelöst, die erfindungsgemäß dadurch gekennzeichnet ist, daß zur Bestimmung des Stapelstauchwiderstand-Vorhersagewertes (BCT-Vorhersagewert) ein neuronales Approximationsnetz oder eine Fuzzy Logic verwendet werden, denen als Eingangsgrößen zumindest die technischen Parameter der Rohpappenspezifikation und die technischen Parameter der Produktspezifikation zugeführt werden und die als Ausgangsgröße zumindest den Stapelstauchwiderstand-Vorhersagewert (BCT-Vorhersagewert) liefert. Vozugsweise können dabei zur Bestimmung des BCT-Vorhersagewertes auch noch weitere Prozeßparameter, wie etwa Maschinenparameter, Labordaten oder auch Daten aus der Weiterverarbeitung der Wellpappebogen zu Produkten im sogenannten Finishing verwendet werden.

Die Vorhersage eines zu erwartenden Stapelstauchwiderstandes auf der Grundlage des Versuches, eine Näherungsformel anzugeben, hat sich, wie bereits vorstehend erwähnt, aufgrund der Komplexität der Einflußfaktoren und ihrer Wechselwirkungen untereinander nicht bewährt. Daher wurde durch die vorliegende Erfindung erfolgreich versucht eben diesen Zusammenhang mittels eines neuronalen Approximationsnetzes oder einer Fuzzy Logic abzubilden. Dabei erlaubt es das neuronale Approximationsnetz den funktionalen Zusammenhang zwischen der durch technische Parameter gegebenen Rohpappenspezifikation von Wellpappe und der gleichfalls durch technische Parameter gegebenen Produktspezifikation des Wellpappeproduktes einerseits und dem gesuchten StapelstauchwiderstandVorhersagewert nach einem entsprechenden Training des neuronalen Netzes zu approximieren. Jedoch kann auch eine diesen Netzen gleichartig wirkende Approximations Fuzzy Logic verwendet werden, welche ebenso als universeller Funktionsapproximator zu wirken vermag. Die enge Verwandtschaft zwischen den neuronalen Netzen und einer Fuzzy Logic wird insbesondere im Falle von Neuro Fuzzy Systemen deutlich, welche einen dualistischen Charakter insoweit aufweisen, als daß sie als neuronales Netz aufgebaut sofort auch die Funktionsweise der zugehörigen äquivalenten Fuzzy Logic offenbaren, indem die Fuzzy Regeln in der Netzstruktur codiert sind, aus welcher sie sich sofort ablesen lassen. Insbesondere lassen sich so auch die zur Verwirklichung der hier vorliegenden Erfindung erforderlichen Approximationsnetze bzw. Approximations Fuzzy Logiken in Form deratiger Neuro Fuzzy Systeme realisieren, die dann gleichzeitig sowohl ein neuronales Approximationsnetz, wie auch eine Approximations Fuzzy Logic darstellen.

Die erfindungsgemäße Vorrichtung ist somit nicht auf einen geschlossenen Ausdruck und die hierzu notwendige Erkenntnis der jeweiligen Wirkzusammenhänge angewiesen, sondern kann vielmehr durch Training des Netzes bzw. Parametrierung mit Fuzzy-Regeln leicht an die zu lösende Aufgabe angepaßt werden. Auch die Aufnahme womöglich wichtiger neuer technischer Parameter, deren Relevanz für die Bestimmung des BCT-Vorhersagewertes erst noch erkannt wird kann vermittels einer solchen Lösung leicht erfolgen, ohne daß es der Erkenntnis der exakten Auswirkung dieser Parameter auf das angestrebte Ergebnis bedarf; dies wird vielmehr durch das Approximationsnetz bzw. die Fuzzy Logic geleistet.

Als neuronale Approximationsnetze eignen sich dabei etwa Multilayer Perceptron Netze (MLP-Netze). Derartige MLP-Netze sind neuronale vorwärtsbetriebene (feedforward) Netze, die eine Eingabeschicht, eine oder mehrere innere Schichten (hidden layer) und eine Ausgabeschicht aufweisen. Die Neuronen der Eingabeschicht führen keinerlei Verarbeitung durch; ihr Zustand wird vielmehr von außen, vorliegend also durch die technischen Parameter der Rohpappenspezifikation und/oder der Produktspezifikation des Wellpappeproduktes bestimmt. Zum Training des Netzwerkes, also zur Bestimmung der funktionsgemäßen Gewichte der Verbindungen zwischen den Neuronen des Netzes kommt beim MLP-Netz vorzugsweise das sogenannte Backpropagation Verfahren zur Anwendung, welches eine Verallgemeinerung der für einfache perceptron Netze, also nicht Multi Layer Perceptrons, verwendeten Delta-Regel darstellt. Dieses Backpropagation Trainingsverfahren läuft dabei vorzugsweise wie folgt ab: Zunächst werden Eingaben auf das Netz gegeben, die dann vorwärts durch das Netz propagiert werden, was zu einer Ausgabe auf den Ausgabeneuronen führt. Sodann werden für die so erhaltenen Ausgaben Fehler bestimmt, indem die tatsächlich erhaltenen Ausgaben mit den gewünschten Ausgaben verglichen werden. Hiernach werden die ermittelten Fehler entsprechend dem der jeweiligen Verbindung zugeordneten Gewicht der vorgeordneten Schicht übermittelt, wobei deren Fehlersignale bestimmt werden. Dies geschieht durch das gesamte Netz zurück von der Ausgabeschicht über alle inneren Schichten hin bis zur Eingabeschicht, wobei Änderungen der Gewichte der Neuronenverbindungen aus den erhaltenen Fehlern der Ausgabe der nachgeordneten Neuronen ermittelt werden. Das Backpropagation (schichtweise rückwärtsbetriebenes) Trainingsverfahren versucht damit das globale Minimum einer geeigneten Fehlerfunktion zu finden, die den Fehler zwischen einer gewünschten und einer tatsächlich erreichten Ausgabe beschreibt. Es handelt sich dabei um ein Gradientenabstiegsverfahren (Verfahren des steilsten Abstiegs), welches vorzugsweise noch durch einen sogenannten Lernfaktor $\eta$ parametriert wird, der die Schrittweite bei der Verfolgung des Gradienten angibt. Es exisitieren dabei eine Reihe von Varianten des Backpropagation Trainingsverfahrens, wie etwa Backpropagation mit Mementum-Term, Weight Decay, Manhattan Training, SuperSAB, Quickprop oder Resilient Propagation (Rprop). Auch die Kontrolle des Lernverfahrens durch eine Fuzzy Logic kommt dabei in Betracht.

Weiterhin eignen sich Radiale Basis Funktions Netze (RBF-Netze) als neuronales Approximationsnetze zur Verwendung in einer erfindungsgemäßen Vorrichtung zur Bestimmung des Stapelstauchwiderstand-Vorhersagewertes (BCT-Vorhersagewert). Bei RBF-Netzen handelt es sich gleichfalls um neuronale vorwätsgerichtete (feedforward) Netze, die jedoch nur eine verdeckte Schicht (hidden layer) von Neuronen aufweisen. Diese Neuronen haben dabei spezielle radialsymmetrische Aktivierungsfunktionen, welche Basisfunktionen eines Funktionensystems sind, welches der Approximation von multidimensionalen Funktionen mittels Stützstellen dient. Vorzugsweise eignen sich dabei die Trainigsvorgaben eines Netzes als solche Stützstellen. Derartige Netze ergeben für Eingaben, die nicht in der Nähe der durch Trainingseingaben abgedeckten Bereiche liegen, nur geringe Aktivierungen, was im Unterschied zu anderen Netztypen, die Sigmoid-Aktivierungsfuktionen verwenden, insoweit vorteilhaft sein kann, als daß sich die Ausgaben eines RBF-Netzes auch außerhalb der vorstehend erwähnten Trainingsbereiche nicht gänzlich unvorhersehbar verhalten. Als Training von RBF-Netzen können die Gewichte der Neuronenverbindungen durch Lösung eines linearen Gleichungssystems zur Bestimmung der Gewichte zur Ausgabeschicht der Neuronen, durch direkte Bestimmung der Gewichte zur Ausgabeschicht der Neuronen mit anschließendem nachträglichen Backpropagation Training oder auch allein durch das Backpropagation Tariningsverfahren bestimmt werden.

In einer bevorzugten Ausführungsform einer erfindungsgemäßen Vorrichtung zur Bestimmung des Stapelstauchwiderstand-Vorhersagewertes (BCT-Vorhersagewertes) wird dem neuronalen Approximationsnetz oder der Fuzzy Logic zumindest die Höhe des Wellpappeproduktes als technischer Parameter der Produktspezifikation zugeführt. Es konnte nämlich im Gegensatz zu der vorbekannten McKee Formel, welche die Höhe unberücksichtigt läßt, gefunden werden, daß eine Berücksichtigung der Höhe des Wellpappeproduktes als technischer Parameter der Produktspezifikation die korrekte Bestimmung des Stapelstauchwiderstand-Vorhersagewertes äußerst positiv beeinflußt. Betreffend die nähere Erläuterung hierzu sei an dieser Stelle auf die nachstehend im weiteren besprochene Figur 5 verwiesen.

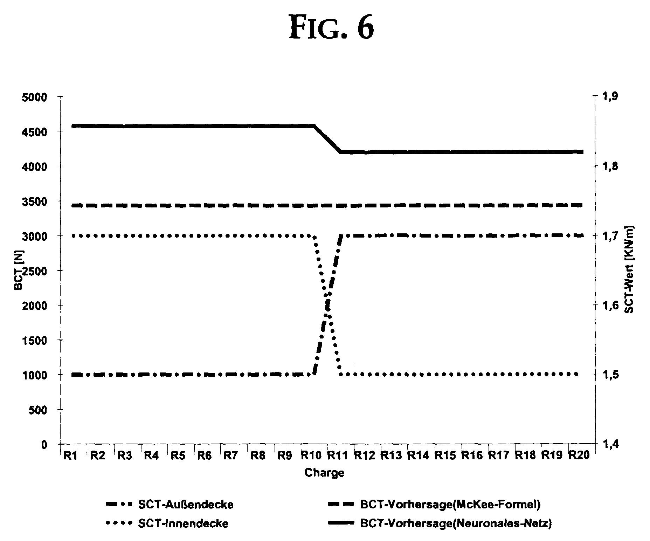

Eine besonders bevorzugte Ausführungsform einer Vorrichtung zur Bestimmung des Stapelstauchwiderstand-Vorhersagewertes (BCT-Vorhersagewertes) nach der vorliegenden Erfindung ist dadurch gekennzeichnet, daß dem neuronalen Approximationsnetz oder der Fuzzy Logic zumindest der Streifenstauchwiderstand (SCT-Wert) der Innendecke und der Streifenstauchwiderstand (SCT-Wert) der Außendecke als technische Parameter der Rohpappenspezifikation unabhängig voneinander zugeführt werden. Es wurde nämlich überraschend gefunden, daß auch die voneinander unabhängige Berücksichtigung dieser Parameter, die jeweils im Zusammenhang mit der Flächenmasse pro m² der verwendeten Innen- bzw. Außendecken stehen, die Bestimmung des BCT-Vorhersagewertes ganz erheblich verbessert. Auch diese Werte wurden nach dem durch die McKee Formel gegebenen Stand der Technik bislang zur Vorhersage des Stapelstauchwiderstandes in dieser Form unberücksichtigt gelassen. Die Streifenstauchwiderstände der Schichten der Wellpappe beeinflussen jedoch maßgeblich die Kantenstauchfestigkeit (ECT-Wert) der Wellpappe und damit letztlich auch den Stapelstauchwiderstand des Produktes, wie etwa einer Faltkiste. Hinsichtlich der diesbezüglichen näheren Erläuterung sei auch hier auf die Zeichnung, nämlich Figur 6 verwiesen. Statt oder ergänzend zu der Berücksichtigung der SCT-Werte kommt hier auch eine voneinander unabhängige Berücksichtigung der bereits vorstehend erwähnten Flächenmassen von Innen- oder Außendecke in Betracht. Auch können, vorzugsweise im Falle von Tray-Produkten, die Abmaße von Ausstanzungen in ihrem Einfluß auf den BCT-Wert berücksichtigt werden.

Die vorstehend beschriebenen Ausführungsformen der vorliegenden Erfindung zur Bestimmung eines Stapelstauchwiderstand-Vorhersagewertes (BCT-Vorhersagewertes) eines Wellpappeproduktes bieten die Möglichkeit, aus der Produktspezifikation und der Rohpappespezifikation einen BCT-Vorhersagewert für das Wellpappeprodukt ausreichend gut zu bestimmen, ohne aufwendige Versuche zur Feststellung des tatsächlich erreichten BCT-Wertes durchführen zu müssen. Vom Abnehmer eines Wellpappeproduktes werden jedoch üblicherweise keine Rohpappespezifikationen an den Produzenten gegeben, sondern es erfolgt lediglich die Angabe der Produktspezifikation und des gewünschten Stapelstauchwiderstandes, den das Wellpappeprodukt mindestens aufweisen muß, also eines Stapelstauchwiderstand-Zielwertes. In diesen Fällen können sodann verschiedene Rohpappespezifikationen ausgewählt und mittels der erfindungsgemäßen Vorrichtungen auf ihre Eignung zur Erfüllung des vom Kunden vorgegebenen Stapelstauchwiderstand-Zielwertes geprüft werden. Dabei können dann nicht nur technische Gesichtspunkte, sondern ergänzend auch kaufmännische Gesichtspunkte, wie etwa der Einstandspreis der diversen Rohpappen berücksichtigt werden. Die vorstehend beschriebene Erfindung ermöglicht bei diesem Vorgehen mittels der erfindungsgemäßen technischen Approximationsvorrichtungen zwar ohne menschliches Zutun (vollautomatisch) die Bestimmung des zu erwartenden Stapelstauchwiderstandes für das Wellpappeprodukt aus dessen eigenen technischen Parametern und den technischen Parametern der verwendeten Rohprodukte heraus, es bedarf jedoch, wie vorstehend beschrieben, noch eines Menschen zur Verwendung der erfindungsgemäßen Vorrichtungen, um aus mehreren Produktspezifikation, die die erfindungsgemäße Vorrichtung hinsichtlich ihres BCT-Wertes als geeignet klassifiziert hat, eine Rohpappespezifikation des Wellpappeproduktes auszuwählen, die dann letztlich zur Produktion verwendet wird.

Während zur Abschätzung des BCT-Wertes derzeit auf Basis der Produktspezifikation, wie bereits eingangs erwähnt, die sogenannte McKee-Formel eine, wenn auch oft unzureichende Approximation des BCT-Wertes für Produkte mit den vorgegebenen Spezifikationen bietet, ist keine Formel für das „umgekehrte" (inverse) Modell zur Berechnung der Rohpappenspezifikationen zu einem gegebenen BCT-Wert bekannt. Die Ergebnisse der vorgenommenen BCT-Wert-Abschätzung können somit auch nicht automatisiert zur Produktionsbeeinflussung bzw. Produktionssteuerung verwendet werden.

Daher ist es weiterhin Aufgabe der vorliegenden Erfindung auf der Grundlage der bereits vorstehend beschriebenen Ausführungsformen eine Vorrichtung anzugeben, die automatisch in der Lage ist, aus Produktspezifikation und BCT-Zielwert eine geeignete Rohpappespezifikation zur Produktion eines Wellpappeproduktes zu bestimmen.

Diese weitere Aufgabe wird durch eine Vorrichtung zur Bestimmung der technischen Parameter einer Rohpappenspezifikation von Wellpappe aus zumindest einer durch technische Parameter gegebenen Produktspezifikation eines Wellpappeproduktes und einem Stapelstauchwiderstand-Zielwert (BCT-Zielwert) als Eingangsgrößen gelöst, die erfindungsgemäß dadurch gekennzeichnet ist, daß sie eine Vorrichtung zur Bestimmung eines Stapelstauchwiderstand-Vorhersagewertes (BCT-Vorhersagewertes) des Wellpappeproduktes nach der vorliegenden Erfindung aufweist, welche zur Bestimmung der Parameter der Rohpappenspezifikation verwendet wird. Hierdurch ist es möglich, die Vorteile der gegenüber dem Stand der Technik viel genaueren BCT-Wert Vorhersage zur Beeinflussung der technischen Parameter der Rohpappenspezifikation, und damit natürlich auch der Produktionskosten zu verwenden, indem die Bestimmungsvorrichtung den ermittelten BCT-Vorhersagewert jeweils den zugehörigen Parametern der Rohpappespezifikation zuordnet und damit feststellen kann, ob der BCT-Vorhersagewert für eine bestimmte Rohpappespezifikation auch den durch den BCT-Zielwert gegebenen Anforderungen genügt. Tut er dies nicht, so kann die Rohpappenspezifikation so geändert werden, bis sie dies tut. Zusätzlich ist es darüber hinaus möglich, innerhalb der so gesetzten technischen Anforderung an den BCT-Wert, die Rohpappenspezifikation auch dahingehend anzupassen, daß sie auch hinsichtlich der Beschaffung der Rohprodukte möglichst kostenoptimal gewählt ist. All diese Möglichkeiten lassen sich sinnvoll erst durch die Verwendung einer erfindungsgemäßen Vorrichtung zur Bestimmung eines Stapelstauchwiderstand-Vorhersagewertes (BCT-Vorhersagewertes) des Wellpappeproduktes nutzen, da die nach dem Stand der Technik bekannten geschlossenen Ausdrücke zur Beschreibung des Zusammenhanges zwischen den technischen Parametern der Rohpappespezifikation und denen der Produktspezifikation einerseits und dem zu erwartenden BCT-Wert andererseits - wie etwa die McKee-Formel - bereits in Richtung der Vorhersage des BCT-Wertes so hohe Ungenauigkeiten aufweisen, daß eine Umkehrung in Richtung eines Schlusses auf die Rohpappenparameter aufgrund der ungenügend aufgeklärten Wirkunsgzusammenhänge keine befriedigenden Ergebnisse liefert.

Die erfindungsgemäße Vorrichtung weist dabei vorzugsweise eine Variationsvorrichtung zur Bestimmung der technischen Parameter der Rohpappenspezifikation auf, welche aus der durch technische Parameter gegebenen Produktspezifikation, dem von der Vorrichtung zur Bestimmung eines Stapelstauchwiderstand-Vorhersagewertes (BCT-Vorhersagewertes) des Wellpappeproduktes nach der vorliegenden Erfindung als Ausgabe erhaltenen Stapelstauchwiderstand-Vorhersagewert (BCT-Vorhersagewert) und dem Stapelstauchwiderstand-Zielwert (BCT-Zielwert) als ihren Eingangsgrößen eine endgültige Variation von technischen Parametern der Rohpappenspezifikation als Ausgangsgrößen ermittelt, aus denen Wellpappeprodukte gefertigt werden können, die den gegebenen technischen Parametern der Produktspezifikation im Rahmen einer ersten Toleranz entsprechen und die einen Stapelstauchwiderstand-Wert (BCT-Wert) aufweisen, der größer als oder im Rahmen einer zweiten Toleranz gleich wie der vorgegebene Stapelstauchwiderstand-Zielwert (BCT-Zielwert) ist, wobei die Variationsvorrichtung zur Ermittlung der endgültigen Variation von technischen Parametern der Rohpappenspezifikation als Ausgangsgrößen auch Zwischenvariationen erzeugen kann, und weiterhin die Vorrichtung zur Bestimmung eines Stapelstauchwiderstand-Vorhersagewertes (BCT-Vorhersagewertes) des Wellpappeproduktes nach der vorliegenden Erfindung derart zur Bestimmung der Parameter der Rohpappenspezifikation verwendet wird, daß sie die technischen Parameter der Produktspezifikation und von der Variationsvorrichtung als deren Ausgangsgrößen die jeweilige Variation (Zwischenvariation oder endgültige Variation) der technischen Parameter der Rohpappenspezifikation als Eingangsgrößen erhält und zumindest diese zur Bildung des Stapelstauchwiderstand-Vorhersagewert (BCT-Vorhersagewert) als Ausgangsgröße verwendet.

Die Variationsvorrichtug ersetzt hierbei den Menschen bei der Auswahl der Rohpappenspezifikation und verwendet hierbei die bereits beschriebenen erfindungsgemäßen Vorrichtungen zur Bestimmung des Stapelstauchwiderstand-Vorhersagewertes (BCT-Vorhersagewertes). Sie variiert die technischen Parameter der Rohpappespezifikation solange, bis eine technische Spezifikation der Rohpappe gefunden ist, die ein Wellpappeprodukt ergibt, welches einerseits den vom Kunden geforderten BCT-Wert erfüllt, andererseits die Kundenanforderung an den BCT-Wert nicht unnötigerweise übererfüllt und/oder möglichst kostenoptimal für den Produzenten ist. Eine mögliche, jedoch (insbesondere in Fällen vieler technischer Parameter der Rohpappenspezifikation) meist zeitaufwendige Betriebsweise der Variationsvorrichtung besteht darin, alle technischen Parameter in einem sinnvoll gewählten Raster in allen möglichen Kombinationen auszuprobieren, bis die geeignete, einer Zielfunktion am besten genügende Rohpappenspezifikation bestimmt ist (brut-force-Verfahren). Diese Betriebsweise kann dadurch verbessert werden, daß gewisse Erfahrungswerte über die Sinnhaftigkeit bestimmter Parameterbereiche und ihrer Kombinationen in einem Speicher hinterlegt werden und die mittels des brut-force-Verfahrens zu variierenden Kombinationen hiermit reduziert werden.

Zu einer entscheidenden Verbesserung der Effizienz der Arbeitsweise der Variationsvorrichtung vermag jedoch die Verwendung eines heuristischen Verfahrens zur Variation der technischen Parameter der Rohpappenspezifikation führen. Die folgenden Ausführungsformen der vorliegenden Erfindung beziehen sich daher auf solche heuristische Betriebsarten der Variationsvorrichtung.

Eine bevorzugte Ausführungsform der vorliegenden Erfindung ist dadurch gekennzeichnet, daß die Variationsvorrichtung die Variation der technischen Parameter der Rohpappenspezifikation, aus denen Wellpappeprodukte gefertigt werden können, die den gegebenen technischen Parametern der Produktspezifikation im Rahmen einer ersten Toleranz entsprechen und die einen Stapelstauchwiderstand-Wert (BCT-Wert) aufweisen, der größer als oder im Rahmen einer zweiten Toleranz gleich wie der vorgegebene Stapelstauchwiderstand-Zielwert (BCT-Zielwert) ist, dadurch ermittelt, daß sie zu Ihrem Betrieb ein genetisches Auswahlverfahren verwendet.

Als Bewertungsfunktion (Fittness-Funktion) des genetischen Auswahlverfahrens kann dabei eine Funktion verwendet werden, die aus der Summe des Produktes eines ersten Wichtungsfaktors mit dem Absolutbetrag der Differenz von Stapelstauchvorhersagewert (BCT-Vorhersagewert) und BCT-Zielwert für die jeweilige Variation von technischen Parametern der Rohpappenspezifikation, und dem Produkt eines zweiten Wichtungsfaktors mit den Kosten, die für die jeweilige Rohpappenspezifikation anfallen gebildet wird.

Eine solche vorzugsweise Betriebsart der Variationsvorrichtung läuft dabei im einzelnen wie folgt ab: Zunächst wird eine sogenannte Anfangspopulation von durch technische Parameter gegebenen Rohpappespezifikationen gewählt. Diese Population kann dabei sinnvollerweise in etwa gleich verteilt über die Parameterbereiche der technischen Parameter der Rohpappespezifikation gewählt werden. Sodann werden alle Populationselemente (also die einzelnen Spezifikationen) anhand einer Bewertungsfunktion bewertet, die vorzugsweise durch folgenden Ausdruck für ein Populationselement Nr. i bestimmt ist:

$$B_i = \text{Wichtungsfaktor}_1 \cdot | \text{BCT-Vorhersagewert}_i - \text{BCT-Zielwert} | + \text{Wichtungsfaktor}_2 \cdot \text{Kosten}_i$$

Sodann werden alle Populationselemente von Rohpappespezifikationen aus der Population gelöscht, deren Bewertung $B_i$ nicht in einen vorgebbaren Prozentsatz von besten Bewertungen fällt; wird so z.B. der Prozentsatz von besten Bewertungen auf 5 % festgelegt, was sich in der Praxis als besonders vorteilhaft erwiesen hat, so werden die 95 % schlechtesten Mitglieder der Population von Rohpappespezifikationen gelöscht. Der Rest der Population bleibt erhalten. Sodann wird die Population wieder auf die ursprüngliche Größe, also 100 % aufgebläht, wobei dies vorzugsweise durch spezielle Verfahren für genetische Algorithmen, nämlich etwa durch die an biologische Vorbilder angelehnten Methoden von Kreuzung und Mutation der übrig gebliebenen, nicht gelöschten durch technische Parameter gegebenen Rohpappespezifikationen geschieht. Das Verfahren wird insgesamt solange wiederholt, bis ein vorgegebenes Maß (Anzahl oder Prozentsatz) von Rohpappenspezifikationen ein bestimmtes Bewertungsmaß ($B_i$) erfüllt oder anders gesagt, bis eine bestimmte Anzahl oder ein bestimmter Prozentsatz innerhalb eines gewählten Fehlerradius liegt. Sodann bricht das Verfahren ab und es wird die beste in der so erhaltenen Abschluß-Population enthaltene Rohpappenspezifikation ausgewählt, welche sodann als endgültige Variation von technischen Parametern der Rohpappenspezifikation als Ausgangsgröße der erfindungsgemäßen Bestimmungsvorrichtung ermittelt wurde.

Eine weitere bevorzugte Ausführungsform der vorliegenden Erfindung ist dadurch gekennzeichnet, daß die Variationsvorrichtung die Variation von technischen Parametern der Rohpappenspezifikation, aus denen Wellpappeprodukte gefertigt werden können, die den gegebenen technischen Parametern der Produktspezifikation im Rahmen einer ersten Toleranz entsprechen und die einen Stapelstauchwert (BCT-Wert) aufweisen, der größer als oder im Rahmen einer zweiten Toleranz gleich wie der vorgegebene Stapelstauchzielwert (BCT-Zielwert) ist, dadurch ermittelt, daß sie zu Ihrem Betrieb ein Gradientenabstiegsverfahren verwendet, wobei als Bewertungsfunktion für den Gradientenabstieg vorzugsweise eine Funktion verwendet wird, die aus der Summe des Produktes eines ersten Wichtungsfaktors mit dem Absolutbetrag der Differenz von Stapelstauchvorhersagewert (BCT-Vorhersagewert) und BCT-Zielwert für die jeweilige Variation von technischen Parametern der Rohpappenspezifikation und dem Produkt eines zweiten Wichtungsfaktors mit den Kosten, die für die jeweilige Rohpappenspezifikation anfallen, gebildet wird.

Diese Gradientenabstiegs-Betriebsart (Methode des steilsten Abstiegs) kann dabei vorzugsweise im einzelnen wie folgt ablaufen: Zunächst wird eine Startkonfigurationen aus durch technische Parameter gegebenen Rohpappespezifikationen gewählt. Dies kann, wie im allgemeinen für heuristische Verfahren geeignet, durch einen Zufallsgenerator geschehen, der die einzelnen Parameter der Rohpappenspezifikation zufällig entsprechend einer geeigneten Zufallsverteilung innerhalb ihrer jeweilig sinnvollen Grenzen setzt. Sodann werden die Parameter der Rohpappenspezifikation ausgehend von der gewählten Startkonfiguration jeweils unter Beibehaltung der anderen Parameter variiert; hierbei wird jeweils die zu der Parameterkosnstellation zugehörige Bewertungsfunktion berechnet. Vorzugsweise kann dabei für die jeweilige Parameterkonstellation auch hier die Bewertungsfunktion

$$B = \text{Wichtungsfaktor}_1 \cdot | \text{BCT-Vorhersagewert} - \text{BCT-Zielwert} | + \text{Wichtungsfaktor}_2 \cdot \text{Kosten}$$

verwendet werden. Ist diese Variation für alle Parameter erfolgt, so wird als neue Parameterkonstellation nun diejenige ausgewählt, die den besten Wert B hinsichtlich der Bewertungsfunktion ergeben hat. Dies wird solange fortgesetzt, bis die Verbesserung unter eine vorgewählte Schranke fällt. Die so gefundene Parameterkonstellation ergibt sodann ein lokales Extremum für die Bewertungsfunktion in der Nähe der ursprünglichen Startkonfiguration. Damit die Chance steigt, auch das tatsächliche globale Extremum zu finden, wählt man zufällig verteilt eine Vielzahl von Startkonfigurationen und führt das voran beschriebene Verfahren für alle diese Startkonfigurationen durch. Aus allen hiermit jeweils gefundenen Rohpappespezifikationen wird nun diejenige ausgewählt, die den besten Wert hinsichtlich der Bewertungsfunktion ergibt. Diese wird dann als endgültige Variation technischer Parameter der Rohpappenspezifikation als Ausgangsgröße von der erfindungsgemäßen Bestimmungsvorrichtung ermittelt.

Die vorliegende Erfindung lehrt damit Vorrichtungen zur qualitätsoptimierten Produktionssteuerung von Wellpappenanlagen. Sie bestimmen die Rohpappenspezifikation in Abhängigkeit von der Produktspezifikation derart, daß das produzierte Produkt einen vorgegebenen BCT-Wert kostenoptimiert einhält. Dazu wird eine Vorrichtung verwendet, die ein neuronales Netzwerkes aufweist und die die Rohpappenspezifikationen anhand von Eingangsparametern wie etwa der Geometrie des Produktes (Länge, Breite, Höhe) und evtl. auch typischen Prozeßparametern sowie dem vorgegebenen BCT-Wert (Qualitätskenngröße) bestimmt. Vorzugsweise können dabei die so ermittelten Rohpappenspezifikationen durch die Einrichtung an die Prozeßsteuerung bzw. an eine Prozeßsteuerungsdatenbank übermittelt werden, um so das Produkt qualitätsoptimiert herzustellen.

Allgemein ist zu den vorgenannten erfindungsgemäßen Vorrichtungen noch anzumerken, daß sie sich selbstverständlich auch besonders gut auf einem entsprechend ausgestatteten Computer, wie etwa einem Prozeßrechner, durch eine geeignete Software realisieren lassen. In diesem Falle werden die einzelnen Vorrichtungen dann auf einer programmgesteuerten Maschine als technisches Verfahren, gesteuert durch das jeweilige Programm realisiert.

Unter Einsatz der vorstehend beschriebenen erfindungsgemäßen Vorrichtungen läßt sich somit eine automatische qualitäts- und kostenoptimierte Beeinflussung, wie etwa eine Steuerung oder Regelung von Wellpappeproduktionen erreichen.

Im folgenden werden nicht einschränkend zu verstehende Ausführungsbeispiele anhand der Zeichnung besprochen. In dieser zeigen:

Fig. **1** die Struktur des zu beeinflussenden Prozesses in schematischer Darstellung,

Fig. **2** die Darstellung der Struktur einer Wellpappenanlage in schematischer Seitenansicht,

Fig. **3** die Prozeßoptimierung unter Verwendung eines inversen Modells nach der vorliegenden Erfindung, ebenfalls in schematischer Darstellung,

Fig. **4** eine erfindungsgemäße Vorrichtung zur Bestimmung der technischen Parameter einer Rohpappenspezifikation von Wellpappe aus einer durch technische Parameter gegebenen Produktspezifikation eines Wellpappeproduktes und einem Stapelstauchwiderstand-Zielwert (BCT-Zielwert) als Eingangsgrößen in schematischer Blockdiagrammdarstellung,

Fig. **5** anschaulich, anhand eines Diagramms den Einfluß der Höhe auf die korrekte Vorhersage des BCT- Wertes, und

Fig. **6** gleichfalls anschaulich anhand eines Diagramms den Einfluß der voneinander unabhängigen Berücksichtigung von Streifenstauchwiderstand (SCT-Wert) der Innendecke und der Streifenstauchwiderstand (SCT-Wert) der Außendecke als technische Parameter der Rohpappenspezifikation zur korrekten Vorhersage des BCT-Wertes.

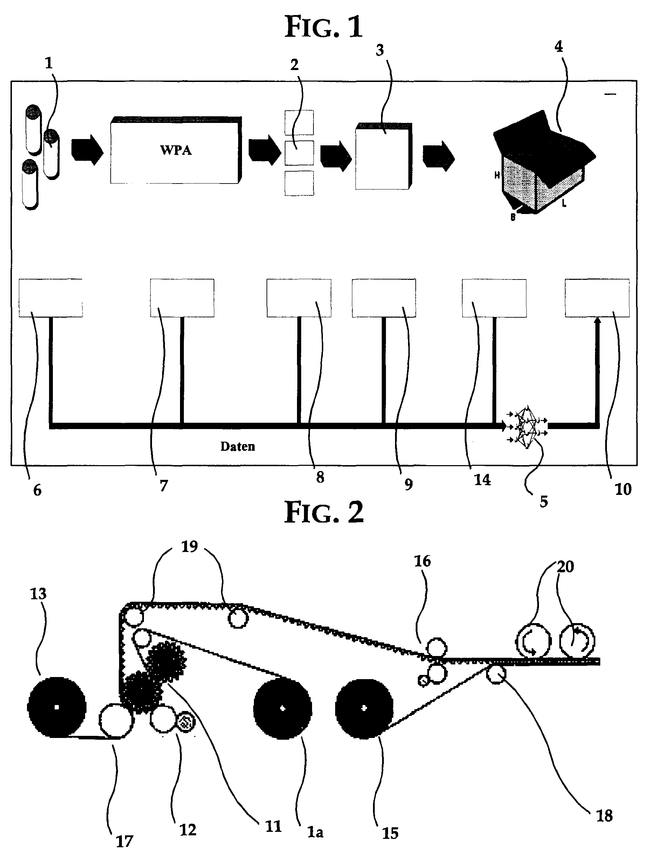

Fig. **1** zeigt die Struktur des zu beeinflussenden Prozesses in schematischer Darstellung. Ausgangsmaterial für die Wellpappenherstellung ist das Rohpapier (Wellpappenrohpapier) **1**. Die Herstellung der Wellpappe (Bogen) **2** erfolgt in der sogenannten Wellpappenanlage (WPA), welche in Figur 2 näher besprochen wird. Die Wellpappenbahnen werden vor Verlassen der Wellpappenmaschine auf die geforderten Formate - abhängig von der weiteren Verarbeitung - zugeschnitten und gerillt. Hieraus entstehen im nächsten Arbeitsgang, dem sogenannten Finishing **3** Wellpappeprodukte **4**, so etwa Schachteln, Stanzverpackungen, polsternde Innenverpackungen, Displays etc. Sogenannte Inline-Maschinen (von engl. "in line" - in einer Reihe) verarbeiten Wellpappenzuschnitte zu fertigen Faltkisten, dem noch immer häufigsten Wellpappenprodukt **4**. Die Verwender von Wellpappenverpackungen müssen sich auf eine gleichbleibende Qualität der verschiedenen Sorten verlassen können. Nur so ist sichergestellt, daß alle Kriterien für den Schutz vor Transport- und Lagerbeanspruchungen auch erfüllt werden. Diese betreffen Beanspruchungen durch Stoß, Druck, Zug und Biegung genauso wie jene, die durch Scheuern, Vibration, Klimaeinflüsse, Korrosion, Strahlen oder Tiere und Pflanzen entstehen. Der Verband der Wellpappenindustrie (VDW) hat Standardqualitäten für Wellpappe geschaffen. Diese Sorten mit zugeordneten Festigkeitswerten erleichtern es den Verwendern, Angebote verschiedener Hersteller zu vergleichen. Das Ziel dieser Standardisierung war es, daß jeder Hersteller von Wellpappe bei Anfragen identische Qualitäten anbietet. Um hier ein Maß für die Festigkeit von Wellpappenverpackungen zu erhalten, wird ein sogenannter Stapelstauchwiderstand-Wert (BCT-Wert) nach einer genormten Prüfmethode gemessen. Bei diesem Box-**C**ompressions-**T**est staucht man eine verschlossene leere Wellpappenverpackung zwischen zwei ebenen und parallelen Druckplatten in einer Prüfpresse mit konstanter Stauchgeschwindigkeit - bis die Verpackung zusammenbricht. Die maximal erreichte Kraft gibt den Stapelstauchwiderstand der Wellpappenverpackung an. Am Ende der Wellpappenproduktherstellung folgt somit die Qualitätssicherung, bei der als wesentliches Kennzeichen der Stapelstauchwiderstand in Newton (BCT-Wert, Box Compression Test) bestimmt wird. Dieser BCT-Wert stellt für Wellpappeverpackungen **4** neben dem für die Transportfähigkeit von Wellpappeverpackungen wichtigen Werten für die Berstfestigkeit (Berstwiderstand) und die Durchstoßarbeit der Wellpappe eine entscheidende Kenngröße dar, die die Stapelfähigkeit der jeweiligen Wellpappeverpackung beschreibt.

Die Vorrichtungen nach der vorliegenden Erfindung stehen nun wie folgt zu dem zuvor beschriebenen Produktionsprozeß in Zusammenhang: Eine Bestimmungsvorrichtung **5** nach der vorliegenden Erfindung dient der technischen Approximation des Zusammenhanges zwischen Rohpappenspezifikation **6** und Produktspezifikationen **14** (etwa der Geometrie des Produktes) einerseits und BCT-Wert.

Diese Vorrichtung **5** verwendet dabei vorzugsweise ein neuronales Approximationsnetz bzw. eine äquivalente Fuzzy Logic bzw. Neuro Fuzzy Logic um hiermit einen BCT-Vorhersagewert **10** zu bestimmen, welcher den tatsächlichen BCT-Wert mit einer hohen Genauigkeit aus den Rohpappenspezifikationen **6**, den Produktspezifikationen **14** und gegebenenfalls auch aus den typischen Prozeßparametern (wie etwa Maschinenparametern **7**, Labordaten **8** oder auch Daten aus der Weiterverarbeitung **9** der Wellpappebogen **2** zu Produkten **4** im sogenannten Finishing **3**) vorhersagt.

Fig. **2** zeigt die Darstellung der Struktur einer Wellpappenanlage (WPA) in schematischer Seitenansicht. Das Papier **1a** wird erwärmt und befeuchtet und erreicht dadurch die erforderliche Elastizität, um geformt zu werden. Es wird dann unter Druck- und Hitzeeinwirkung zwischen zwei zahnradartig ineinandergreifenden Riffelwalzen **11** hindurchgeführt. So kommt die Welle in die Pappe. Je nach gewünschter Wellenform haben die Walzen eine grobe, mittlere oder feine Riffelung. So entstehen die unterschiedlichen Wellenarten, die nach Wellenhöhe und -breite definiert sind. Das gewellte Papier wird dann mit erhitztem Stärkeleim in einer Vorrichtung zum Leimauftrag **12** mit einer glatten Deckenbahn **13** verklebt. Die einseitige Wellpappe ist fertig. Wird auf die einseitige Wellpappe eine zweite Deckenbahn **15** nach zuvor erfolgtem weiteren Leimauftrag **16** aufgeklebt, entsteht die einwellige Wellpappe. Sie ist die verbreitetste Wellpappenart. Durch Hinzufügen weiterer gewellter und glatter Papierbahnen wird mehrwellige (zwei- und dreiwellige) Wellpappe hergestellt. Diese Sorten werden bei besonderen Anforderungen an die Stabilität eingesetzt. Dies geschieht mit Hilfe rotierender Schneid- und Rillmesser, die in Längs- oder in Querrichtung arbeiten. Bis zu 300 Meter Wellpappe pro Minute können an modernen Wellpappenanlagen hergestellt werden. In der vorliegenden Figur sind weiter zu sehen: eine erste Anpreßwalze **17**, eine zweite Anpreßwalze **18**, Führungswalzen **19** und Belastungswalzen **20**.

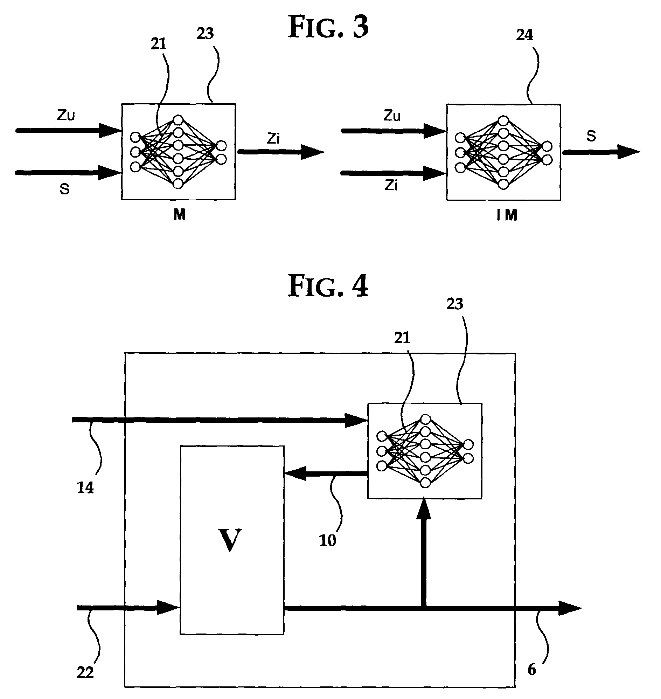

Fig. **3** zeigt die Prozeßoptimierung unter Verwendung eines inversen Modells nach der vorliegenden Erfindung: Zur Bildung des neuronalen Prozeßmodells wird zunächst ein Modell (**M**) **23** (linker Teil der Figur) mit dem BCT-Vorhersagewert als Zielgröße (**Zi**) gebildet, welches den BCT-Wert mit einer hohen Genauigkeit aus den Zustandsgrößen (**Zu**), nämlich zumindest den technischen Parametern der Produktspezifikation und den Stellgrößen (**S**) bestimmt; ferner kann vorzugsweise auch noch die Berücksichtigung von weiteren Prozeßgrößen hierbei vorgesehen sein. Das neuronale Approximationsnetz **21** stellt dabei ein Modell für den technischen Zusammenhang zwischen den geforderten Produktspezifikationen (**Zu**), (und evtl. auch weiteren typischen Prozeßparametern), der vorhergesagten Produktqualität in Form des BCT-Vorhersagewertes (**Zi**) und der Spezifikationen der für die Produktion verwendeten Rohpappen (**S**) dar. Das Approximationsnetz bzw. die äquivalente Approximierungstechnologie (Fuzzy Logic, Neuro Fuzzy System) dient dabei der technischen Abbildung des Zusammenhanges zwischen Produktspezifikation, evtl. den typischen Prozeßparametern, dem BCT-Wert und der Rohpappenspezifikation im Bereich der Wellpappenherstellung.

Durch Invertierung dieses Modells zu einem invertierten Modell (**IM**) 24 (siehe rechter Teil der Figur) werden dann (bei Vorgabe des gewünschten BCT-Wertes) - hier als Zielgröße (**Zi**) in der Terminologie des nicht invertierten Modells bezeichnet - die Rohpappenspezifikationen - hier jetzt als Stellgröße (**S**) - für die gewünschte Produktspezifikation - als Zustandsgröße (**Zu**) - vorzugsweise unter Berücksichtigung der aktuellen Werte der typischen Prozeßparameter ermittelt. Aus der Menge der gültigen Lösungen (konkrete technische Rohpappenspezifikationen) wird mit Hilfe einer Bewertungsfunktion (vorzugsweise einer Kostenfunktion) eine möglichst kostenoptimale Rohpappenspezifikation zur Produktionssteuerung ausgewählt; dies jedoch unter Erfüllung der technisch bedingten Restriktionen.

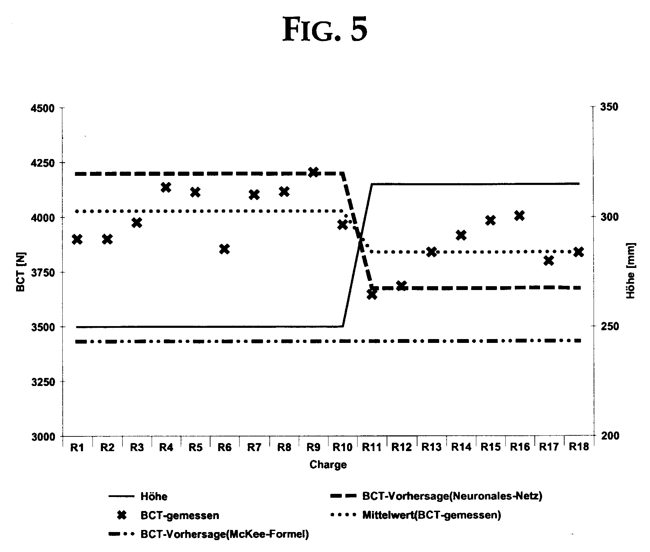

Fig. **4** zeigt eine erfindungsgemäße Vorrichtung zur Bestimmung der technischen Parameter einer Rohpappenspezifikation **6** von Wellpappe aus zumindest einer durch technische Parameter gegebenen Produktspezifikation **14** eines Wellpappeproduktes und einem Stapelstauchwiderstand-Zielwert (BCT-Zielwert) 22 als Eingangsgrößen in schematischer Blockdiagrammdarstellung, wobei sie eine erfindungsgemäße Vorrichtung zur Bestimmung eines Stapelstauchwiderstand-Vorhersagewertes (BCT-Vorhersagewertes) des Wellpappeproduktes **23** aufweist, welche zur Bestimmung der Parameter der Rohpappenspezifikation **6** verwendet wird.

Sie verwendet dabei eine Variationsvorrichtung (**V**) zur Bestimmung der technischen Parameter der Rohpappenspezifikation **6**, welche aus der durch technische Parameter gegebenen Produktspezifikation **14**, dem von der Vorrichtung zur Bestimmung eines Stapelstauchwiderstand-Vorhersagewertes nach der vorliegenden Erfindung erhaltenen Stapelstauchwiderstand-Vorhersagewert **10** und dem Stapelstauchwiderstand-Zielwert **22** als ihren Eingangsgrößen eine endgültige Variation von technischen Parametern der Rohpappenspezifikation als Ausgangsgrößen **6** ermittelt, aus denen Wellpappeprodukte gefertigt werden können, die den gegebenen technischen Parametern der Produktspezifikation im Rahmen einer ersten Toleranz entsprechen und die einen Stapelstauchwiderstand-Wert (BCT-Wert) aufweisen, der größer als oder im Rahmen einer zweiten Toleranz gleich wie der vorgegebene Stapelstauchwiderstand-Zielwert (BCT-Zielwert) ist.

Die Variationsvorrichtung kann dabei zur Ermittlung der endgültigen Variation von technischen Parametern der Rohpappenspezifikation als Ausgangsgrößen auch Zwischenvariationen erzeugen; dies etwa im falle der beschriebenen heuristischen Betriebsweisen.

Die erfindungsgemäße Vorrichtung nutzt dabei in der vorliegenden Ausführungsform die Vorrichtung zur Bestimmung eines Stapelstauchwiderstand-Vorhersagewertes nach der vorliegenden Erfindung **23** derart zur Bestimmung der Parameter der Rohpappenspezifikation **6**, daß diese **23** die technischen Parameter der Produktspezifikation **14** und darüber hinaus auch von der Variationsvorrichtung (**V**) deren eigenen Ausgangsgrößen, nämlich die jeweilige Variation (Zwischenvariation oder endgültige Variation) der technischen Parameter der Rohpappenspezifikation als Eingangsgrößen erhält und zumindest diese zur Bildung des Stapelstauchwiderstand-Vorhersagewert **10** als Ausgangsgröße verwendet.

Fig. **5** zeigt anschaulich anhand eines Diagramms den Einfluß der Höhe auf die korrekte Vorhersge des BCT- Wertes. Die Graphik bezieht sich auf Faltkisten mit der folgenden Spezifikation

| Länge | [mm] | 385 |
|---|---|---|
| Breite | [mm] | 287 |
| Höhe | [mm] | 250 bzw. 315 |
| Flächenmasse Außendecke | g/m2 | 230 |
| Flächenmasse Welle | g/m2 | 150 |
| Flächenmasse Innendecke | g/m2 | 210 |
| ECT | | 6,13 |
| BCT | [N] | 3432,41 |
| Umfang | [mm] | 672 |
| Seitenverhältnis | | 0,75 |

Deutlich ist zu sehen, wie die McKee-Formel nach dem Stand der Technik den Einfluß der Höhe gänzlich ignoriert, obschon der tatsächlich gemessene BCT-Wert (siehe auch Mittelwert hierüber gebildet) deutlich höhenabhängig ist. Das in diesem Ausführungsbeispiel für die erfindungsgemäße Bestimmungsvorrichtung verwendete neuronale Netz hingegen berücksichtigt auch die Höhe als technischen Parameter der Produktspezifikation und trifft so den tatsächlichen BCT-Wert deutlich besser.

Fig. **6** zeigt anschaulich anhand eines Diagramms den Einfluß der voneinander unabhängigen Berücksichtigung von Streifenstauchwiderstand (SCT-Wert) der Innendecke und der Streifenstauchwiderstand (SCT-Wert) der Außendecke als technische Parameter der Rohpappenspezifikation zur korrekten Vorhersge des BCT- Wertes. Auch hier ist deutlich zu sehen, welche Verbesserung die Verwendung der erfindungsgemäßen Vorrichtung unter Verwendung eines neuronalen Approximationsnetzes bringt, das die SCT-Werte für Außen- und Innendecke entsprechend unabhängig voneinander als Eingangsgrößen berücksichtigt. Ergänzend sei angemerkt, daß eine voneinander unabhängige Berücksichtigung der Flächenmassen von Außen- und Innendecke einen ähnlich signifikaten Effekt zeigt, wie er hier zu sehen ist.

**Patentansprüche**

1.  Vorrichtung zur Bestimmung eines Stapelstauchwiderstand-Vorhersagewertes (BCT-Vorhersagewertes) (**10**) eines Wellpappeproduktes (**4**) aus einer durch technische Parameter gegebenen Rohpappenspezifikation von Wellpappe (**6**) und/oder einer gleichfalls durch technische Parameter gegebenen Produktspezifikation (**14**) des Wellpappeproduktes, dadurch gekennzeichnet, daß zur Bestimmung des Stapelstauchwiderstand-Vorhersagewertes (BCT-Vorhersagewert) (**10**) ein neuronales Approximationsnetz (**21**) oder eine Approximations Fuzzy Logic verwendet werden, denen als Eingangsgrößen zumindest die technischen Parameter der Rohpappenspezifikation (**6**) und die technischen Parameter der Produktspezifikation(**14**) zugeführt werden und die als Ausgangsgröße zumindest den Stapelstauchwiderstand-Vorhersagewert (BCT-Vorhersagewert) (**10**) liefert.

2.  Vorrichtung zur Bestimmung des Stapelstauchwiderstand-Vorhersagewertes (BCT-Vorhersagewert) (**10**) nach Anspruch 1, dadurch gekennzeichnet, daß als neuronales Approximationsnetz (**21**) ein Multi Layer Perceptron Netz (MLP-Netz) verwendet wird.

3.  Vorrichtung zur Bestimmung des Stapelstauchwiderstand-Vorhersagewertes (BCT-Vorhersagewert) (**10**) nach Anspruch 1, dadurch gekennzeichnet, daß als neuronales Approximationsnetz (**21**) ein Radiales Basis Funktions Netz (RBF-Netz) verwendet wird.

4.  Vorrichtung zur Bestimmung des Stapelstauchvorhersagewertes (BCT-Vorhersagewert) (**10**) nach einem der Ansprüche 1, 2 oder 3 dadurch gekennzeichnet, daß dem neuronalen Approximationsnetz (**21**) oder der Fuzzy Logic zumindest die Höhe des Wellpappeproduktes als technischer Parameter der Produktspezifikation (**14**) zugeführt wird.

5.  Vorrichtung zur Bestimmung des Stapelstauchwiderstand-Vorhersagewertes (BCT-Vorhersagewert) (**10**) nach einem der Ansprüche 1, 2 oder 3 dadurch gekennzeichnet, daß dem neuronalen Approximationsnetz (**21**) oder der Fuzzy Logic zumindest der Streifenstauchwiderstand (SCT-Wert) der Innendecke und der Streifenstauchwiderstand (SCT-Wert) der Außendecke als technische Parameter der Rohpappenspezifikation (**14**) unabhängig voneinander zugeführt werden.

6.  Vorrichtung zur Bestimmung der technischen Parameter einer Rohpappenspezifikation (**6**) von Wellpappe aus zumindest einer durch technische Parameter gegebenen Produktspezifikation (**14**) eines Weilpappeproduktes und einem Stapelstauchwiderstand-Zielwert (BCT-Zielwert) (**22**) als Eingangsgrößen, dadurch gekennzeichnet, daß sie eine Vorrichtung zur Bestimmung eines Stapelstauchwiderstand-Vorhersagewertes (BCT-Vorhersagewertes) (**23**) des Wellpappeproduktes nach einem der Ansprüche 1 bis 5 aufweist, welche zur Bestimmung der Parameter der Rohpappenspezifikation (**14**) verwendet wird.

7.  Vorrichtung zur Bestimmung der technischen Parameter einer Rohpappenspezifikation (**6**) von Wellpappe aus zumindest einer durch technische Parameter gegebenen Produktspezifikation (**14**) eines Wellpappeproduktes und einem Stapelstauchwiderstand-Zielwert (BCT-Zielwert) (**22**) als Eingangsgrößen nach Anspruch 6, dadurch gekennzeichnet, daß sie

    eine Variationsvorrichtung (**V**) zur Bestimmung der technischen Parameter der Rohpappenspezifikation (**6**) aufweist, welche aus

der durch technische Parameter gegebenen Produktspezifikation (**6**),

dem von der Vorrichtung zur Bestimmung eines Stapelstauchwiderstand-Vorhersagewertes (BCT-Vorhersagewertes) (**23**) des Wellpappeproduktes nach einem der Ansprüche 1 bis 5 als Ausgabe erhaltenen Stapelstauchwiderstand-Vorhersagewert (BCT-Vorhersagewert) (**10**), und

dem Stapelstauchwiderstand-Zielwert (BCT-Zielwert) (**22**)

als ihren Eingangsgrößen eine endgültige Variation von technischen Parametern der Rohpappenspezifikation (**6**) als Ausgangsgrößen ermittelt, aus denen Wellpappeprodukte gefertigt werden können, die den gegebenen technischen Parametern der Produktspezifikation (**14**) im Rahmen einer ersten Toleranz entsprechen und die einen Stapelstauchwiderstand-Wert (BCT-Wert) aufweisen, der größer als oder im Rahmen einer zweiten Toleranz gleich wie der vorgegebene Stapelstauchwiderstand-Zielwert (BCT-Zielwert) (**22**) ist,

wobei die Variationsvorrichtung (**V**) zur Ermittlung der endgültigen Variation von technischen Parametern der Rohpappenspezifikation (**6**) als Ausgangsgrößen auch Zwischenvariationen erzeugen kann, und

weiterhin die Vorrichtung zur Bestimmung eines Stapelstauchwiderstand-Vorhersagewertes (BCT-Vorhersagewertes) (**23**) des Wellpappeproduktes nach einem der Ansprüche 1 bis 5 derart zur Bestimmung der Parameter der Rohpappenspezifikation (**6**) verwendet wird, daß sie die

die technischen Parameter der Produktspezifikation (**14**), und

von der Variationsvorrichtung (**V**) als deren Ausgangsgrößen die jeweilige Variation (Zwischenvariation oder endgültige Variation) der technischen Parameter der Rohpappenspezifikation (**6**)

als Eingangsgrößen erhält und zumindest diese zur Bildung des Stapelstauchwiderstand-Vorhersagewertes (BCT-Vorhersagewert) (**10**) als Ausgangsgröße verwendet.

**8.** Vorrichtung nach Anspruch 7, dadurch gekennzeichnet, daß die Variationsvorrichtung (**V**) die Variation von technischen Parametern der Rohpappenspezifikation (**6**), aus denen Wellpappeprodukte gefertigt werden können, die den gegebenen technischen Parametern der Produktspezifikation (**14**) im Rahmen einer ersten Toleranz entsprechen und die einen Stapelstauchwiderstand-Wert (BCT-Wert) aufweisen, der größer als oder im Rahmen einer zweiten Toleranz gleich wie der vorgegebene Stapelstauchwiderstand-Zielwert (BCT-Zielwert) (**22**) ist, dadurch ermittelt, daß sie zu Ihrem Betrieb ein genetisches Auswahlverfahren verwendet.

**9.** Vorrichtung nach Anspruch 8, dadurch gekennzeichnet, daß als Bewertungsfunktion (Fittness-Funktion) des genetischen Auswahlverfahrens eine Funktion verwendet wird, die aus der Summe

des Produktes eines ersten Wichtungsfaktors mit dem Absolutbetrag der Differenz von Stapelstauchwiderstand-Vorhersagewert (BCT-Vorhersagewert) (**10**) und Stapelstauchwiderstand-Zielwert (BCT-Zielwert) (**22**) für die jeweilige Variation von technischen Parametern der Rohpappenspezifikation (**6**), und

dem Produkt eines zweiten Wichtungsfaktors mit den Kosten, die für die jeweilige Rohpappenspezifikation (**6**) anfallen

gebildet wird.

**10.** Vorrichtung nach Anspruch 7, dadurch gekennzeichnet, daß die Variationsvorrichtung (**V**) die Variation von technischen Parametern der Rohpappenspezifikation (**6**), aus denen Wellpappeprodukte gefertigt werden können, die den gegebenen technischen Parametern der Produktspezifikation im Rahmen einer ersten Toleranz entsprechen und die einen Stapelstauchwiderstand-Wert (BCT-Wert) aufweisen, der größer als oder im Rahmen einer zweiten Toleranz gleich wie der vorgegebene Stapelstauchwiderstand-Zielwert (BCT-Zielwert) (**22**) ist, dadurch ermittelt, daß sie zu Ihrem Betrieb ein Gradientenabstiegsverfahren verwendet.

**11.** Vorrichtung nach Anspruch 10, dadurch gekennzeichnet, daß als Bewertungsfunktion für den Gradientenabstieg eine Funktion verwendet wird, die aus der Summe

des Produktes eines ersten Wichtungsfaktors mit dem Absolutbetrag der Differenz von Stapelstauchwiderstand-Vorhersagewert (BCT-Vorhersagewert) (**10**) und Stapelstauchwiderstand-Zielwert (BCT-Zielwert) (**22**) für die jeweilige Variation von technischen Parametern der Rohpappenspezifikation (**6**), und

dem Produkt eines zweiten Wichtungsfaktors mit den Kosten, die für die jeweilige Rohpappenspezifikation (**6**) anfallen

gebildet wird.

# FIG. 1

# FIG. 2

**FIG. 3**

**FIG. 4**

# FIG. 5

## FIG. 6